Europäisches Patentamt

**European Patent Office**

Office européen des brevets

(11) Publication number: **0 164 768**

**B1**

(12) **EUROPEAN PATENT SPECIFICATION**

(45) Date of publication of patent specification: **17.11.88**

(21) Application number: **85200616.2**

(22) Date of filing: **17.04.85**

(51) Int. Cl.⁴: **A 61 C 13/225**

(54) A device for securing a dental prosthesis.

(30) Priority: **17.04.84 NL 8401247**

(43) Date of publication of application:
**18.12.85 Bulletin 85/51**

(45) Publication of the grant of the patent:
**17.11.88 Bulletin 88/46**

(84) Designated Contracting States:
**AT BE CH DE FR GB IT LI LU NL SE**

(56) References cited:
**EP-A-0 069 167**
**CH-A- 295 239**
**GB-A-2 085 303**
**US-A-2 151 723**

(73) Proprietor: **Oden B.V.**
**Korenbeursstraat 26**
**NL-4611 PW Bergen op Zoom (NL)**

(72) Inventor: **Backes, Franciscus Theodorus**
**Johannes Marie**
**Nieuwmoersteenweg 70**
**B-2190 Essen (BE)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

EP 0 164 768 B1

# Description

This invention relates to a device for securing a dental prosthesis, comprising at least one pin element having an elongated cylindrical body with a spherical head at one end and a collar at a distance from said head; and at least one sleeve element having at least one longitudinal slot over a portion of its length, the sleeve and the slot having such a width that the head of the pin element can be introduced into the sleeve with the slot in the sleeve element being located over the cylindrical body; said sleeve being attached to the frame of a dental prosthesis.

Such a device for securing a dental prosthesis is known from CH-A-295,239 and from GB-A-2,085,303.

Until now, partial dental prostheses in most cases have consisted of a frame which is in contact with either the lower jaw or the upper jaw, which frame carries the artificial elements; and a number of hook-shaped projections on the frame, the so-called clasps. The shape of these clasps is accurately determined for every prosthesis with reference to the dimensions and shape of the dental elements to which the prosthesis is detachably secured. The clasps have both a supporting function, to prevent displacement of the prosthesis in the mouth, both in the lateral direction and in vertical direction, towards the subjacent gums, and a retention function to prevent in particular the upper jaw prosthesis to fall from the upper jaw. It is in particular with a view of the rentention function of the clasps that the shape and elasticity of the material thereof must be very accurately determined, because the clasps must engage with a specific portion of the dental element which is to carry the prosthesis, and is required to possess a certain elasticity for it to be brought into this position.

Owing the severe demands imposed upon the shape and degree of elasticity of the clasps, their manufacture requires great experience, and is time-consuming and expensive. In addition, clasps have the disadvantage of being apt to damage the dental elements carrying the prosthesis, with which they are in engagement, and food residues tend to accumulate behind them, which, unless the wearer observes extreme hygiene, will rapidly lead to erosion of the remaining dental elements.

In the prior art as disclosed by CH-A-295,239 and GB-A-2,085,303 the disadvantages of the use of clasps is tried to overcome by using a pin element that is mounted to the dental elements for carrying the prosthesis. The collar of this pin element is located at the other end thereof and is mounted to an existing dental element by forming a jacket crown over this dental elements (as in CH-A-295,239), which jacket crown in most cases will be made of gold; or by bringing a cast mass of gold or another suitable alloy into the dental element (as in GB-A-2,085,303). This makes the placement of the pin element quite expensive and asks for a painful and longlasting treatment of the patient's dental element.

It is an object of the invention to provide a device for securing a dental prosthesis, in which at least part of the disadvantages inherent in the use of clasps or of the known pin elements is overcome.

For this purpose the invention provides a device wherein the collar is located intermediate the head and the other end of the pin element.

According to the invention, the pin element is mounted in the side surface of the dental element intended to carry the dental prosthesis, which side surface is directed to the space in which the prosthesis is to be placed. For this purpose, a hole is drilled in the dental element, in which the free end of the pin is secured by known means, in such a manner that the collar bears on the side surface of the dental element. On at least one side of the frame of the prosthesis, the sleeve is secured in such a manner that its slot can be shifted over the pin, whereby the head at the one end of the pin falls in the sleeve.

The placement of the pin element according to the invention therefore is simple and cheap and gives no more discomfort than the drilling of a single hole in the dental element.

It is observed that US-A-2,151,723 shows a pin element in the form of a screw with a head and a collar in the form of a lock nut, the lock nut being located at a distance from the other end of the screw. This arrangement serves for the permanent fixation of a natural tooth restoration and after this tooth restoration has been fixated, the free end of the screw with the head as well as the lock nut are cut of the casting.

The width of the slot in the sleeve has been selected, for example, so that it is a little smaller than the thickness of the pin, so that some force is required to couple the sleeve and the pin together, so that the bead is so firmly connected to the sleeve, and hence to the dental prosthesis, that the prosthesis cannot fall from the mouth during use, but is detachable for it to be cleaned.

In a preferred embodiment, the sleeve is provided with a plurality of longitudinal slots, with one longitudinal slot serving to receive the pin, with the other or others serving to permit the sides of said one longitudinal slot to move resiliently, by virtue of which the pin can be still better clamped in the sleeve, and wear and tear during the introduction and removal of the prosthesis is reduced.

In another embodiment, the spherical bead of the pin, hereinafter to be referred to as the head of the pin, is of resilient construction so that, after its introduction in the sleeve, it becomes stuck against the inner walls thereof. In this embodiment the width of the slot may be slightly in excess of the thickness of the pin to reduce wear and tear.

It is also possible to make resilient both the longitudinal slot in the sleeve by means of the provision of a number of further longitudinal slots, and also the pin head.

The advantage of the fastening device according to the invention is that the retention function of hitherto used clasps is taken over by the pin and sleeve device, and that only a supporting function remains for the clasp, so that the latter needs to fall less far around the prosthesis-carrying dental element, which causes a reduction in wear and tear thereof, as a result of the clasps, while also less severe demands need to be imposed upon the shape of the clasp.

In addition, implanting the pin in the prosthesis carrying dental element is rather a simple matter, because when the position of the pin has been well chosen, its actual position relative to the side surface of the dental element may deviate in the lateral direction to some extent, and in the vertical direction even to a great extent, without adversely affecting the position of the prosthesis. Accordingly, the hole for the pin in the dental element need not be drilled with great accuracy.

The pins in the dental elements can be kept clean without any problem, because they can be easily cleaned with a tooth brush.

Finally, the spherical pin head has the advantage that the prosthesis has some liberty of movement especially in the vertical direction, because the sleeve is capable of tilting about the head. By virtue of this, no undue force is exercised on the prosthesis-carrying dental elements during chewing, which prevents damage thereto and prevents the pin element from becoming dislodged.

Naturally, in most cases, a sleeve is secured on both sides of the frame of the prosthesis, and pins are mounted on the healthy prosthesis-carrying dental elements on opposite sides of the aperture to be filled by the prosthesis. It is also possible, however, to use a sleeve-and-pin connection on one side only and to opt for another, known per se solution on the other side, e.g. when there is no remaining dental element on that side.

Some embodiments of the invention will be described hereinafter with reference to the accompanying drawings, in which:

Fig. 1 shows a side-elevational view of a pin element for a device according to the invention;

Fig. 2 shows a front-elevational view of the pin element of Fig. 1;

Fig. 3 shows a first embodiment of a sleeve for a device according to the invention in side-elevational view;

Fig. 4 shows a second embodiment of a sleeve for the device according to the invention in side-elevational view.

Fig. 5 shows a third embodiment of a sleeve for the device according to the invention in side-elevational view;

Fig. 6 shows a bottom view of the sleeve of Fig. 5; and

Fig. 7 diagrammatically shows a set of teeth to which a dental prosthesis has been secured by means of the device according to the invention.

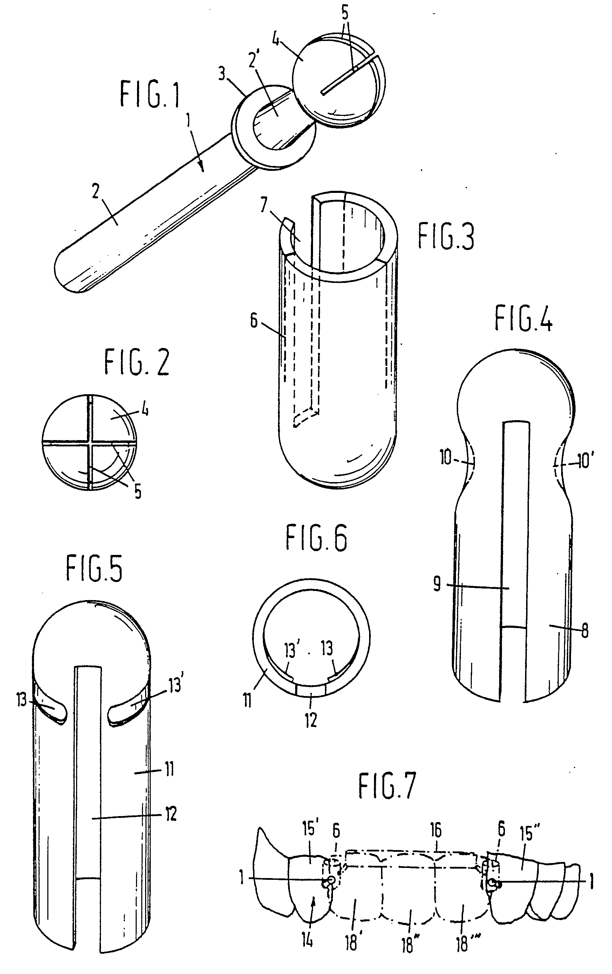

Figs. 1 and 2 show a pin element 1 for the device according to the invention for securing a dental prosthesis, comprising a cylindrical portion 2 intended to be implanted in a healthy dental element capable of carrying a prosthesis, which end preferably has a rough surface to facilitate its being fastened in the dental element, a collar 3 located around this cylindrical portion 2, which collar limits the length through which the portion 2 can be introduced into the dental element, and also provides a supporting function for the pin element 1 against the dental element when subjected to loads in the vertical and lateral directions; and an essentially spherical head 4 at the other end of the pin element 1, there being a cylindrical portion 2' intermediate collar 3 and head 4. Head 4 may have a closed outer surface, and even be solid, but alternatively, as shown in Figs. 1 and 2, may be provided with slots 5 at its outer surface, which give the head an adjustable resiliency. The pin element 1 may be made, for example, of titanium. When the pin 1 is intended to be stuck to a dental element by means of an adhesive, the cylindrical portion 2 is of course absent, and the left-hand side surface of collar 3, as viewed in Fig. 1, is stuck to the side surface of the dental element.

Fig. 3 shows a first embodiment of a sleeve for the device according to the invention, comprising a body 6 and a longitudinal slot 7 over a portion of the length of the sleeve. Slot 7 is of such width as to be capable of accommodating the portion 2' of pin element 1 with head 4 being located within the sleeve. The position of head 4 within sleeve 6 is determined either by the length of slot 7, with the upper end thereof forming an abutment for pin portion 2'. In that case body 6 of the sleeve may have either an open or a closed upper end. Or, in the case of a sleeve having a closed upper end, by head 4 contacting the upper surface on the inside of body 6, or by both measures.

When head 4 is of resilient construction, the width of slot 7 may be equal to, or in excess of, the thickness of pin portion 2', with the diameter of the head, in the quiescent state, being slightly in excess of the diameter of the sleeve, so that the head is capable of becoming wedged in the sleeve. Alternatively, however, the sleeve body 6 may be provided with one or more further longitudinal slots, shown dotted, which extend essentially parallel to slot 7 and enable the longitudinal sides thereof to move somewhat resiliently apart so that slot 7 clamps around pin portion 2'. It is also possible for both the sleeve and the head 4 of pin element 1 to be of resilient construction to secure optimal fastening.

Fig. 4 shows another embodiment of a sleeve 8, provided with a longitudinal slot 9 and a pair of indentations 10 and 10'. These indentations 10, 10' are so designed that they are capable of being flexed resiliently apart during the introduction of the head 4 of the pin element to permit the entry of the head into the top portion of the sleeve, with the head being locked in this top portion owing to the indentations 10, 10' springing back after the passage of the head.

Figs. 5 and 6 show yet another embodiment of a sleeve 11 with a longitudinal slot 12. Sleeve 11 is provided with inwardly curved resilient lips 13 and 13', which enable the head 4 of pin element 1 to pass to the top of the sleeve and after the passage of head 4 spring back, thereby locking the head within the sleeve.

The sleeves shown in Figs. 4 and 5, like the sleeve of Fig. 3, may be provided with a plurality of longitudinal slots to impart the desired resiliency of the sidewalls of slots 7, 9 or 12, respectively, and these sleeves can be used either with a pin element with a closed or solid head or with a pin element with a resilient head, as shown in Figs. 1 and 2.

The sleeves shown in Figs. 3-6 may be made of, for example, gold, stainless steel, plastic or rubber, and can be soldered to the frame of the prosthesis, or secured to it in any other suitable way.

Fig. 7 shows a portion of a set of teeth 14 with a pair of dental elements 15', 15'' mounting pins 1 of the device according to the invention. Mounted on opposite sides of a frame 16 of a dental prosthesis are sleeves 6 as shown in Fig. 3, which are positioned over the spherical heads of the pin elements 1. The frame carries a plurality of artificial teeth 18', 18'' and 18'''. If necessary, clasps not shown can be secured to the frame to rest against dental elements 15' and 15'' and prevent lateral displacement of the prosthesis.

It will be clear that a large number of modifications of both the pin elements and the sleeves will readily occur to those skilled in the art without departing from the scope of the invention, the only essential points being that the heads of the pin elements can be accommodated within the sleeves and that these heads are detachably locked within the sleeves in some way.

## Claims

1. A device for securing a dental prosthesis, comprising at least one pin element (1) having an elongated cylindrical body (2, 2') with a spherical head (4) at one end and a collar at a distance from said head; and at least one sleeve element (6, 8, 11) having at least one longitudinal slot (7, 9, 12) over a portion of its length, the sleeve and the slot having such a width that the head of the pin element can be introduced into the sleeve with the slot in the sleeve element being located over the cylindrical body; said sleeve being attached to the frame of a dental prosthesis, characterized in that the collar (3) is located intermediate the head (4) and the other end of the pin element (1).

2. A device according to claim 1, characterized in that the head (4) at the one end of the pin element (1) is provided with at least one transverse slot (5) such that the head can be resiliently compressed.

3. A device according to claim 1 or 2, characterized in that the sleeve element (6) is provided with further longitudinal slots such that the longitudinal sides of said one longitudinal slot (7) can be resiliently bent apart.

4. A device according to claim 1, 2 or 3, characterized in that the sleeve element (8) is provided adjacent its top end with at least one indentation (10; 10'), which indentation is arranged to move resiliently outwardly for the introduction of the head (4) of the pin element (1).

5. A device according to any one of claims 1, 2 or 3, characterized in that the sleeve element (11) is provided with at least one inwardly curved lip portion (13; 13') adjacent the top end thereof, which lip portion can resiliently move towards the outer wall of the sleeve element for the sleeve to receive the head (4) at the end of the pin element (1).

6. A sleeve element evidently intended for use in the device as claimed in any one of the preceding claims.

7. A pin element evidently intended for use in a device as claimed in any one of claims 1-6.

## Patentansprüche

1. Einrichtung zum Befestigen einer Zahnprothese, die mindestens ein Stiftelement (1), das einen länglichen zylindrischen Körper (2, 2') mit einem sphärischen Kopf (4) an einem Ende und einem Bund (3) in einem Abstand von dem Kopf hat, und mindestens ein Hülsenelement (6, 8, 11) mit mindestens einem sich über einen Teil seiner Länge erstreckenden Längsschlitz (7, 9, 12) aufweist, wobei die Hülse und der Schlitz eine solche Breite haben, daß der Kopf des Stiftelements in die Hülse eingeführt werden kann, wobei der Schlitz des Hülsenelements über dem zylindrischen Körper angeordnet ist; wobei die Hülse an dem Rahmen einer Zahnprothese angebracht ist, dadurch gekennzeichnet, daß der Bund (3) zwischen dem Kopf (4) und dem anderen Ende des Stiftelementes (1) angeordnet ist.

2. Einrichtung nach Anspruch 1, dadurch gekennzeichnet, daß der Kopf (4) an dem einen Ende des Stiftelementes (1) mit mindestens einem Querschlitz (5) versehen ist, derart, daß der Kopf federnd zusammengepreßt werden kann.

3. Einrichtung nach Anspruch 1 oder 2, dadurch gekennzeichnet, daß das Hülsenelement (6) mit weiteren Längsschlitzen versehen ist, derart, daß die Längsseiten des einen Längsschlitzes (7) federnd beiseite gebogen werden können.

4. Einrichtung nach Anspruch 1, 2 oder 3, dadurch gekennzeichnet, daß das Hülsenelement (8) nahe seinem oberen Ende mit mindestens einer Einbuchtung (10; 10') versehen ist, welche so ausgebildet ist, daß sie sich für das Einführen des Kopfes (4) des Stiftelementes (1) federnd nach außen bewegt.

5. Einrichtung nach einem der Ansprüche 1, 2 oder 3, dadurch gekennzeichnet, daß das Hülsenelement (11) nahe seinem oberen Ende mit mindestens einem nach innen gebogenen Lippenteil (13; 13') versehen ist, welcher Lippenteil sich federnd in Richtung auf die Außenwand des Hülsenelementes bewegen kann, damit die Hülse den Kopf (4) am Ende des Stiftelementes (1) aufnimmt.

6. Hülsenelement, das offenbar zur Benutzung bei der in einem der vorhergehenden Ansprüche beanspruchten Einrichtung bestimmt ist.

7. Stiftelement, das offenbar zur Benutzung bei der in einem der Ansprüche 1 bis 6 beanspruchten Einrichtung bestimmt ist.

**Revendications**

1. Dispositif pour fixer une prothèse dentaire, comprenant au moins une broche (1) ayant un corps cylindrique allongè (2, 2') avec une tête sphérique (4) à une extrémité et un collet à une distance de cette tête, et au moins une douille (6, 8, 11) ayant au moins une fente longitudinale (7, 9, 12) sur une partie de sa longueur, la douille et la fente ayant une largeur telle que la tête de la broche peut être introduite à l'intérieur de la douille avec la fente de celle-ci étant située au-dessus du corps cylindrique, cette douille ètant attachée à l'armature d'une prothèse dentaire, caractérisé en ce que le collet (3) est à une position intermédiaire entre la tête (4) et l'autre extrémité de la broche (1).

2. Dispositif selon la revendication 1 caractérisé en ce que la tête (4) à ladite extrémité de la broche (1) est pourvue d'au moins une fente transversale (5) telle que cette tête peut être comprimée élastiquement.

3. Dispositif selon la revendication 1 ou 2 caractérisé en ce que la douille (6) est pourvue de fentes longitudinales supplémentaires telles que les bords longitudinaux de ladite fente longitudinale (7) peuvent être espacés élastiquement.

4. Dispositif selon la revendication 1, 2 ou 3 caractérisé en ce que la douille (8) est prévue au voisinage de son extrémité supérieure avec au moins une zone enfoncée (10, 10') qui est agencée pour être déplacée élastiquement vers l'extérieur pour l'introduction de la tête (4) de la broche (1).

5. Dispositif selon l'une quelconque des revendications 1, 2 ou 3 caractérisè en ce que la douille (11) est pourvue d'au moins une lèvre incurvée vers l'intérieur (13, 13') au voisinage de son extrémité supérieure, lèvre qui peut être déplacée èlastiquement vers la paroi extérieure de la douille pour que celle-ci reçoive la tête (4) de l'extrémité de la broche (1).

6. Douille destinée à l'évidence à être utilisée dans le dispositif de l'une quelconque des revendications précédentes.

7. Broche destinée à l'évidence à être utilisée dans un dispositif selon l'une quelconque des revendications 1 à 6.

EP 0 164 768 B1

FIG.1

FIG.3

FIG.2

FIG.4

FIG.5

FIG.6

FIG.7

1